# EUROPEAN PATENT APPLICATION

(11) **EP 4 537 933 A1**
(43) Date of publication of application: **16.04.2025**
(21) Application number: 22945616.5
(22) Date of filing: 14.12.2022
(51) Int. Cl.: B01J 20/281, G01N 30/02, G01N 30/60, G01N 30/56, B01D 15/22

(54) **CHROMATOGRAPHY MEDIUM AND CHROMATOGRAPHY DEVICE**

(30) Priority: 07.06.2022 CN 202210632049
(71) Applicant: Smart Liquid Crystal Technologies Co., Ltd., Suzhou, Jiangsu 215500 (CN)
(72) Inventor: WANG, Rui, Suzhou, Jiangsu 215500 (CN); YANG, Min, Suzhou, Jiangsu 215500 (CN); XUE, Jiuzhi, Suzhou, Jiangsu 215500 (CN)
(74) Representative: Gille Hrabal Partnerschaftsgesellschaft mbB Patentanwälte
(86) International application number: PCT/CN2022/139034
(87) International publication number: WO 2023/236488

(57) **Abstract**

The present invention relates to a chromatography medium and a chromatography apparatus comprising the same. The chromatography medium is at least partially composed of polymer materials formed by crosslinking at least partially cross-linkable oligomer materials, including rigid nanoparticles, and the rigid nanoparticles at least partially form a substantially ordered structure. According to the chromatography medium and chromatography apparatus disclosed in the present application, the polymer microparticles stack can be used as the stationary phase where, at least sections of the microparticles have internal structural ordering, including molecular orientation and pore structure ordering, or an integral structure can be used as the stationary phase where, the rigid nanoparticles at least partially form a substantially ordered structure, which not only may effectively increase the separation speed and shorten the peak elution times, but improve the peak symmetry, efficiently the full width at half maximum and improve the column efficiency.

## Description

### TECHNICAL FIELD

The invention relates to chromatography medium and chromatography apparatus containing the chromatography medium, and more particularly to chromatography mediums made of polymer microparticles with regular internal structures and pore arrangements and to chromatography apparatus comprising the same.

### BACKGROUND

Gel filtration chromatography (GFC), also known as Molecular-Exclusion Chromatography (MEC), is a branch of size exclusion chromatography (SEC). It mainly utilizes the molecular sieve action of the porous gel structure to produce a liquid chromatography method that primarily separates based on the difference in molecular size. It is a liquid chromatography method separates mainly according to a difference in molecular size, which is generated by the molecular sieving effect of the porous gels and characterized in that there are no mutual affections of chemical properties between the components, the separation conditions are mild, and the sample recovery is high, and this is one of the most widely used separation method applied to life sciences field. The rationale for GFC is that when mixtures of biomacromolecules, e.g., proteins having molecules of different mass and other complex molecules, go through the chromatographic column with porous gels, small proteins can enter the interior of the stationary phase through its smaller or larger pores, macromolecular proteins can only enter the interior of the stationary phase through its larger pores. In contrast, larger protein molecules have no access to the stationary phase and instead stay in the particle gaps of the stationary phase particulates and then co-elute with the mobile phase. In principle, macromolecular proteins are eluted first, and small proteins are lag eluted to achieve effective separation.

Conventional GFC methods typically employ a packing method to fill the column with a stationary phase. Then, the mobile phase containing a product to be separated is introduced into the column. The mobile phase is generally a solvent having certain inert and some dissolving power for the sample, and it does not control the degree of separation, so the separation of the chromatographic column is independent of the interaction between the sample and the mobile phase. Alternatively, the stationary phase determines the separation. The types of stationary phases that are currently in common use include hydrophilic organo-gels and polysaccharide gel spheres, which are the most critical type among them and have broad applications in ion exchange chromatography, affinity chromatography and hydrophobic interaction chromatography for separating or purifying small molecules, bioactive substances and the like.

Given its broad uses and great success in biopharmaceutical separations, the literature on the biomacromolecule microspheres comprising agarose matrices is vast. The earliest related reference includes Hjerten, S. Biochim. Biophys. Acta 1964, 79:393-398; and Bengtsson et al., S. Biochim. Biophys. Acta 1964. 79:399, and the earliest related patent publication about agarose microspheres includes U.S. Pat. No. 4,647,536, the earliest patent or academic literature containing polysaccharide microspheres for chromatography columns appeared earlier. Research suggests that the pore structure of the medium is closely related to the surface contact area between the pore and protein, which also determines the resolution and loading effect, etc., of the separation results of proteins. Therefore, as a medium of the chromatography column, the interior pore size, structure, size distribution, particle size, their distribution, shape, and mechanical property of the polysaccharide gel beads significantly affect the separation effect and separation speed. However, as far as can be determined, it is not possible to control the interior pore structure of polysaccharide gel beads by methods such as mechanical stirring, homogeneous emulsification, membrane emulsification, and the like, and in view of its inherent soft characters, the known polysaccharide gel beads are so soft which would lead to poor pressure resistance, so the corresponding chromatography column is mainly confined to low-speed biological protein separation application. In addition, the raw material of the most widely used agarose microspheres is extracted from algae by multiple steps, and it is a high-cost raw material that is expensive for large-scale production.

On the other hand, some bioactive substances to be separated are prone to losing activity because of structural changes, which can be attributed to poor tolerance of temperatures, shear forces, and changes in the solvent environment. Because stringent chromatographic conditions are required for bioactive substances, the matrix usually needs excellent mechanical performance, chemical stability, and separation efficiency. Otherwise, it can give rise to denaturation and deterioration of the proteins.

Accordingly, there is a need to provide a chromatography medium applied to gel filtration chromatography, which has a uniform and controllable particle size, an ordered internal structure and pore distribution with a certain strength to improve the separation efficiency of the chromatography column during the chromatographic separation and save separation time

### SUMMARY

This invention aims at providing a chromatography apparatus applied to gel filtration chromatography by adopting polymer materials as chromatography medium where, at least, sections of the polymer materials have internal structural ordering, including molecular orientation and pore structure ordering, to meet the above-described needs.

The embodiment and purpose of the present application are hereinafter described and illustrated, given by examples combined with systems, tools, and methods. These examples are just exemplary and explanatory rather than limitation. In various embodiments, the present invention has met one or more market requirements, while other embodiments are directed to other improvements.

The primary objective of the present application is to provide a chromatography medium applied to gel filtration chromatography, which is at least partially composed of polymer materials formed by crosslinking at least partially cross-linkable oligomer materials, including rigid nanoparticles, wherein at least one of the rigid nanoparticles has a non-spherical shape in a solution. The rigid nanoparticles at least partially form a substantially ordered structure, such as orientational order in the chromatography medium.

One object of the present application is to provide a chromatography medium in which at least part of the polymer material filled is polymer microparticles, wherein the polymer microparticles have rigid nanoparticles which are partially ordered or overall ordered inside the polymer microparticles.

Another object of the present application is to provide a chromatography medium which is formed by integrally crosslinking at least partially cross-linkable oligomer materials, including rigid nanoparticles, and the rigid nanoparticles at least partially form a substantially ordered structure, such as orientational order in the chromatography medium.

Another object of the present application is to provide a chromatography apparatus to which the chromatography medium is applied.

For the purposes of the application, the application provides a chromatography medium, which is at least partially composed of polymer materials formed by crosslinking at least partially cross-linkable oligomer materials, including rigid nanoparticles, wherein at least one of the rigid nanoparticles has a non-spherical shape in a solution, and the rigid nanoparticles at least partially form a substantially ordered structure, such as orientational order in the chromatography medium.

As a further improvement of the application, the chromatography medium is formed by accumulating the polymer materials, which are at least partially polymer microparticles; the polymer microparticles are formed by crosslinking at least partially cross-linkable oligomer materials, including rigid nanoparticles, wherein at least one of the rigid nanoparticles has a non-spherical shape in a solution. The rigid nanoparticles at least partially form a substantially ordered structure, such as orientational order in the polymer microparticle.

As a further improvement of the application, the polymer microparticles have one or more regions in which rigid nanoparticles are arranged substantially in order, and the molecular arrangement between the plurality of areas may not be correlated, correlated, or partially correlated.

As a further improvement of the application, the chromatography medium is formed by integrally crosslinking at least partially cross-linkable oligomer materials, including rigid nanoparticles, wherein at least one of the rigid nanoparticles has a non-spherical shape in a solution. The rigid nanoparticles at least partially form a substantially ordered structure, such as orientational order in the chromatography medium.

As a further improvement of the application, the shapes of the non-spherical rigid nanoparticles are rod-shaped, strip-shaped, sheet-shaped, needle-shaped, or linear, with its feature direction along the direction of the longitudinal axis of the molecule.

As a further improvement of the application, the shape of the non-spherical rigid nanoparticles is disk-shaped, with its feature direction perpendicular to the disk.

As a further improvement of the application, there is internal structural ordering over the whole chromatography medium; the distribution of the feature direction is any one of substantially along the particle radius direction, along the particle bipolar axis direction, or on a plurality of concentric circles inside the microparticles.

As a further improvement of the application, the feature direction is substantially parallel, fan-shaped, or spirally arranged in an ordered local region.

As a further improvement of the application, at least one member of the rigid nanoparticles is selected from the polypeptide, protein, nucleic acid, polysaccharide, and lipid group.

As a further improvement of the application, rigid nanoparticles having a non-spherical shape are cellulose nanocrystals or cellulose nanofibers.

As a further improvement of the application, wherein the chromatography medium further comprises a polysaccharide compound having no obvious non-spherical shape in a solution, the polysaccharide compound and the rigid nanoparticles are copolymerized to form the polymer microparticles.

As a further improvement of the application, wherein the mass ratio of the rigid nanoparticles to the polysaccharide compound is 1:10 -50:1.

As a further improvement of the application, wherein at least one member of the polysaccharide compound is selected from the group consisting of agar, agarose, dextran, starch, chitosan, and trehalose.

As a further improvement of the application, the chromatography medium has a range of separation of 50-300000 kDa.

In another aspect, the present application also discloses a chromatography apparatus, comprising,
carrier body;
a chromatography medium filled inside or coated on the surface of the carrier body;
the chromatography medium includes any one or more of the preceding chromatography mediums.

As a further improvement of the application, the wall of the carrier body is of the shape of cylinder, rectangle or curved hollow duct.

As a further improvement of the application, the axial cross-section of the cylindrical container is any one selected from a circle, oval or polygon.

As a further improvement of the application, wherein the carrier body is made of material selected from any one or more of plastic, glass, ceramic or metal.

### Benefits:

According to the chromatography medium and chromatography apparatus disclosed in the present application as applied to gel filtration chromatography, the polymer microparticles stack can be used as the stationary phase where at least sections of the microparticles have internal structural ordering, including molecular orientation and pore structure ordering, or an integral structure can be used as the stationary phase where, the rigid nanoparticles at least partially form a substantially ordered structure, such as orientational order in the chromatography medium, which not only may effectively increase the separation speed and shorten the peak elution times, but improve the peak symmetry, efficiently reduce peak width at half maximum and improve the column efficiency.

### BRIEF DESCRIPTION OF THE DRAWINGS

FIG. 1 is a schematic view of a porous chromatography medium according to prior art;
FIG. 2 is a schematic view of a porous chromatography medium according to the present application.
FIG. 3 comprises four pictures, in which FIG. 3(a) is a cross-sectional view of a polymer microparticle disclosed by the present application, and FIG. 3(b) shows in enlarged scale a detail of part D of FIG.3(a), and FIG. 3(c) shows in enlarged scale detail of part E of FIG.3(a), and FIG. 3(d) is the SEM photographs of the polymer microparticles in some embodiments;
FIG. 4 comprises four pictures, in which FIG.4(a) is the radial configuration of the polymer microparticles, and FIG. 4(b) is the bipolar configuration of the polymer microparticles and FIG. 4(c) is the loop conformation of the polymer microparticles, and FIG.4(d) is the crossed-polarized microscopy image of the polymer microparticles with the radial configuration;
FIGS. 5(a-d) illustrate schematic views of various chromatography mediums according to the present application.
FIG. 6 comprises two pictures, in which FIG.6(a) is a schematic view of the chromatography apparatus, and FIG. 6(b) is the separation principle of the chromatography apparatus.
FIGs. 7(a-b) illustrate schematic views of two chromatography apparatus;
FIGS. 8(a-d) illustrate axial cross-sections along A-A' of the chromatography apparatus of FIG. 6(a).
FIG. 9 is a crossed-polarized microscopy image of polymer microparticles prepared according to Preliminary Example 1 of the present application.
FIG. 10 is a crossed-polarized microscopy image of polymer microparticles prepared according to Preliminary Example 2 of the present application.
FIG. 11 is a crossed-polarized microscopy image of polymer microparticles prepared according to Preliminary Example 3 of the present application.
FIG. 12 is a crossed-polarized microscopy image of polymer microparticles prepared according to Preliminary Example 4 of the present application.
FIG. 13 comprises three pictures, showing the results of gel filtration chromatography (GFC) for separating standards by using chromatography apparatus prepared according to Examples 1-4 and Comparative Example 1, wherein, the inhibitor in FIG. 13 (a) is acetone, the standard in FIG. 13 (b) is CytochromeC, the standard in FIG.13 (c) is BSA.
FIG. 14 shows the results of gel filtration chromatography (GFC) for separating standards by using chromatography apparatus prepared according to Examples 5 and Comparative Example 2.

### DETAILED DESCRIPTION OF EMBODIMENTS

In order to make the objects, technical solutions, and advantages of the present application more precise, the technical solutions of the present application will be clearly and completely described in the following section concerning the embodiments of the present application. It is apparent that the described embodiments are a part of the embodiments of the present application rather than all of the embodiments. All other embodiments obtained by those skilled in the art based on the technical solutions and embodiments provided by the present application and without the creative work are all within the scope of the present application.

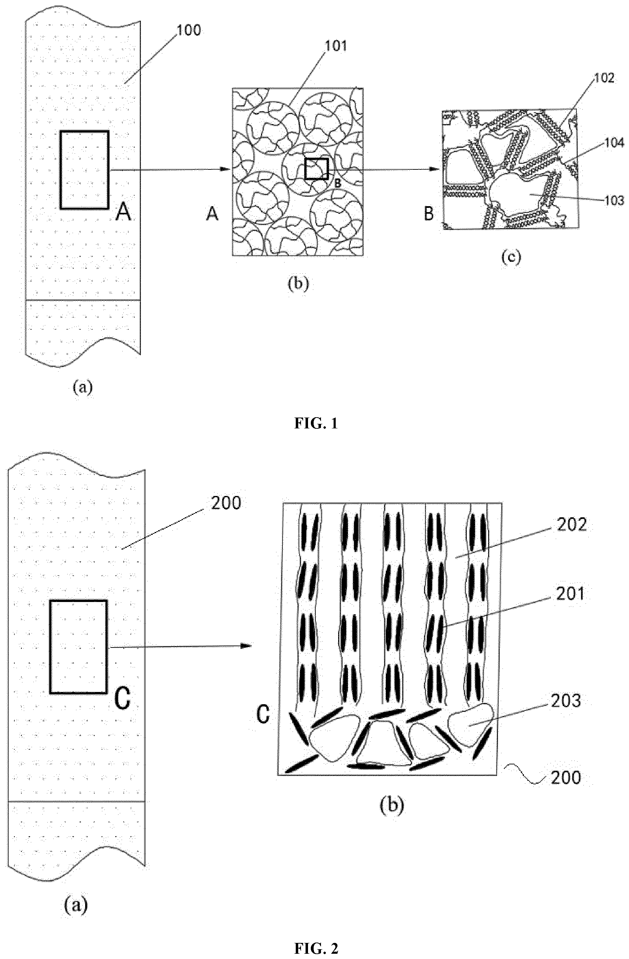

Either for the so-called monolithic columns or microsphere-packed columns, the most outstanding feature of the existing chromatography medium for chromatographic analysis is that the pores are disordered. For example, FIG. 1(a) shows the most common agarose-type chromatography medium 100, prepared from agarose microspheres with a structure filled by agarose microspheres 101. An enlarged view for details of part A of the agarose-type chromatography medium (as shown in FIG. 1(b)) shows the stacked structure of the agarose microspheres; FIG. 1(c) further indicates that the pores of the porous agarose microspheres are structures disorderly arranged and cross-linked by agarose. The preparation method for the agarose microspheres 101 consists of dispersing agarose in water. Moreover, the polysaccharide-containing tiny aqueous droplets suspended in the oil phase are formed by appropriate emulsification techniques. An enlarged view for details of part B of the agarose microspheres (as shown in FIG. 1(c)) shows that after the temperature of the emulsion is cooled, the single chain of the polysaccharide compound 102 forms a double helices structure, and then pore 103 are formed between the molecular beams. Finally, the polysaccharide microspheres are formed with the aid of crosslinking agent 104. As the polysaccharide molecules are disorderly arranged in water, the internal pores of the microspheres thus formed are also placed randomly, and given the inherent soft characteristics of the polysaccharide molecules, the microspheres cross-linked are usually relatively soft.

In accordance with the spirit of this application, using non-spherical rigid nanoparticles, it would be possible to prepare the porous chromatography medium where the orientation of the nanoparticles is ordered, the pore structures are controllable, and the microparticles have excellent mechanical properties. As shown in FIG. 2 (a-b), the at least partially ordered chromatography medium, where at least sections of the microparticles have internal structural ordering in an ordered molecule, including molecular orientation (as shown in FIG.2(a)) and pore structure ordering (as shown in FIG.2(b)).

Many biomacromolecules in nature are independent or dispersed in water to present a non-spherical, symmetrical, rigid form. According to the lyotropic liquid crystal theory, when such rigid nanoparticles (equivalent to biomacromolecules as mentioned hereinafter) are dispersed in a solvent, the rigid nanoparticles may be arranged disorderly in the solvent or in an ordered molecular arrangement of some lyotropic liquid crystals such as a nematic phase (such as a tobacco mosaic virus nanomaterial), a near-crystalline phase, a cholesteric phase, and a columnar phase liquid crystal, depending on the concentration and the characteristics of the rigid nanoparticles. Liquid crystal materials ordered usually exhibit optical birefringence, so the ordered droplets or solvents containing non-spherical biomacromolecules are clearly visible under a polarizing microscope, and a typical liquid crystal conformation is presented.

In accordance with the spirit of this application, FIG.2(b) is an enlarged view for details of part C in FIG. 2 (a) and shows partial internal structure of the chromatography medium 200 having at least partial orderd arrangement, which contains the rigid nanoparticle 201. When the concentration of the rigid nanoparticles reaches a critical liquid concentration, the rigid nanoparticles may remain in an ordered structure, and thus, the pore structure formed between the nanoparticles may also remain ordered, that is, ordered pores 202. In addition, a portion of the nanoparticles fail to form an ordered structure, and further, the pores 203 formed are disordered. Further, the cross-linking process includes adding a cross-linking agent or other flexible molecules to form the chromatography medium in which the critical concentrations for liquid crystal phase formation of the rigid nanoparticles 201 that meet or exceed after crosslinking, some of the nanoparticles are still arranged in order, and the ordered pores 202 are correspondingly arranged in order.

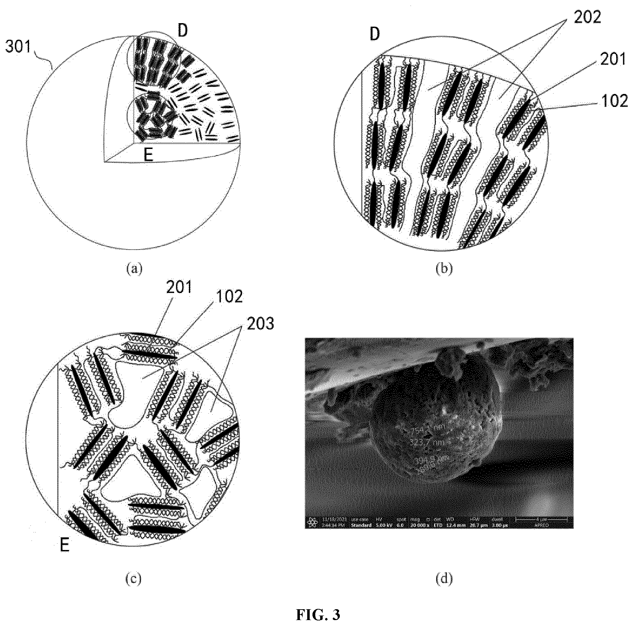

In accordance with the spirit of this application, similar to a chromatographic medium stacked with porous agarose microspheres, the method of forming the chromatography medium having an ordered arrangement of pores exploits the stacked polymer microparticles with ordered pore channels, as illustrated in FIG. 3.

In accordance with the spirit of this application, when the rigid nanoparticles are biomacromolecules, the present application is able to prepare porous biomacromolecule polymer microspheres having at least partially ordered molecules and ordered pore structures. After the microspheres with ordered pore structures are stacked, the chromatography mediums can be obtained, where at least in sections of its overall structure are arranged substantially in order.

Specifically, cellulose nanocrystals (CNC) have a suitable aspect ratio and size distribution. These biomacromolecules have a certain rigidity in their solvent water and can form a lyotropic liquid crystal phase. In accordance with the spirit of this application, when the biomacromolecules are cellulose nanocrystals (CNC) and as its concentration reaches a critical concentration, the CNC molecules may be self-assembled to form an ordered structure, thereby showing an orderly arranged liquid crystal phase.

FIG. 3 is a polymer microparticle having a porous structure according to the present application. Specifically, FIG. 3 (a) shows a diametrical cross-section of the partial interior space of the polymer microsphere. The rigid nanoparticles may still remain an ordered structure, at least in part, after crosslinking, and due to the influence of the molecular arrangement, the pore structure formed may also be partially ordered, as shown in FIG. 3(b). The rigid nanoparticles solution shown in FIG. 3 (a) may be emulsified to form droplets when it may also be in a local ordering state, and the rigid nanoparticles 201 within the emulsion also similarly tend to be partially ordered, as shown in FIG. 3 (a). When the temperature of the emulsion is lowered, the rigid nanoparticles 201 retain the alignment and are further cross-linked to form polymer microparticles then the internal structure at least partially retains the previously ordered conformation, and at the same time, as shown in FIG. 3 (b), the ordered pores 202 formed between the rigid nanoparticles basically inherit the same ordered conformation so that the pores of the formed polymer microparticles at least partially form a substantially ordered structure. The phrase "substantially ordered" refers to that at least in a substantially ordered area, at least a portion of the pore and at least a portion of its adjacent one has a certain correlation with the arrangement of their directions and positions. Specifically, at least in a substantially ordered area, at least a portion of the pore is substantially parallel, fan-shaped, or spirally arranged with at least a portion of its adjacent one. As shown in FIG. 3(d), as a preferred embodiment, the pore diameter is 1-1000 nm.

In accordance with the spirit of this application, the substantially ordered structures of rigid nanoparticles in the emulsion may include one or more regions by controlling its concentration. Meanwhile, the molecular arrangement between the plurality of regions may not be correlated, correlated, or partially correlated. Moreover, the substantially ordered structures may be overall ordered, or may be partially ordered. When in overall ordered form, in a substantially ordered region, the distribution of the feature direction of the rigid nanoparticle is any one of substantially along the particle radius direction, along the particle bipolar axis direction, or in a plurality of concentric circles inside the microparticles. When in partially ordered form, in a substantially ordered region, the feature direction of the rigid nanoparticle is substantially parallel, fan-shaped, or spirally arranged.

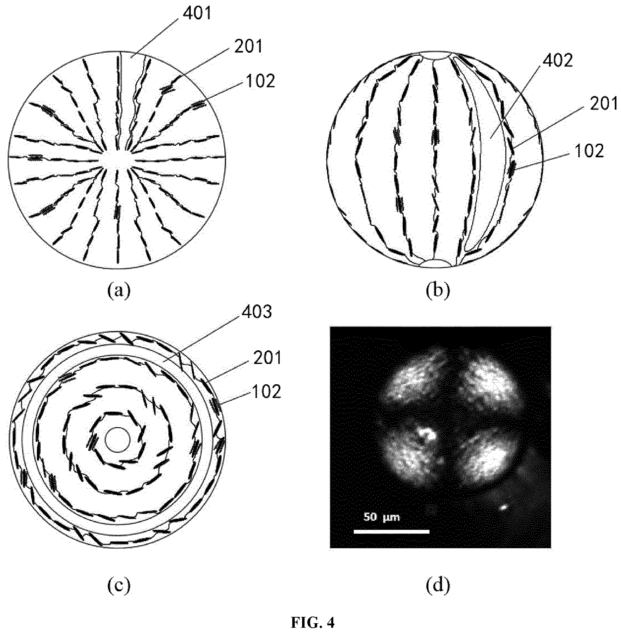

Within the overall ordered range, some special conformations may be formed structurally due to these substantially ordered structures, including the radial configuration (the feature direction is arranged in order along the radius direction), and the first ordered pores 401 are formed with its directions point at the circle center, as shown in FIG. 4 (a), and the bipolar configuration as shown in FIG. 4 (b) (the feature direction is arranged in order along the bipolar direction), and the second ordered pores 402 are formed inside which is along the direction of the bipolar axis, and the loop conformation as shown in FIG. 4 (c) (the feature direction is in concentric circle arrangement), and the third ordered pores 403 are formed inside whose arrangement is a concentric circle arrangement, however, this disclosure is not limited thereto, and it may also be other ordered conformation. At the same time, due to the optical birefringence characteristic generally possessed by the rigid nanoparticles, these special conformations show a special optical phenomenon under a polarizing microscope. For example, as shown in FIG. 4 (a), the feature direction of the rigid nanoparticles tends to be arranged in order along the radius direction in the emulsion drops, and the interior structure and the pores of the polymer microparticles formed thereby also tend to be arranged in order along the radius direction, thus having a radial configuration and showing an optical anisotropy of Maltese black cross under a polarizing microscope, as shown in FIG. 4(d).

Within the partially ordered range, as shown in FIG. 3 (a), the external region of the polymer microparticles comprises multiple parts D, as shown in FIG. 3(b) and multiple parts E as shown in FIG. 3(c). Part D is a local region with the feature direction of the biomacromolecule substantially ordered, and part E is a disordering region for the feature direction of the biomacromolecule. An ordered pore 202 and a disordered pore 203 are formed inside the polymer microparticles at the same time. Even though the polymer microparticles do not have a specific conformation, the feature directions of the polymer microparticles are still regularly arranged in a small area, and color development can still be observed under a polarizating microscope.

In accordance with the present invention, it would be possible to prepare the rigid nanoparticle droplets of different sizes and partially ordered structures, which are then crosslinked to form the polymer microparticles that are at least partially ordered on the molecular and pore structural scale. In a preferred embodiment, the average particle size of the polymer microparticles in the solvent, which is usually an aqueous solvent, is 1-500 microns. More preferably, the average particle size is 5-150 microns. When used as fillers for chromatography columns, tiny particles will lead to a high back pressure of the chromatography column, and huge particles will lead to low column efficiency.

In accordance with the spirit of this application, the polymer microparticle 301 which is formed by crosslinking at least partially cross-linkable oligomer materials, including rigid nanoparticles 201 (i.e., biomacromolecules), wherein at least one of the rigid nanoparticles has a non-spherical shape in a solution. The biomacromolecule is a rod-shaped molecule with a feature direction in the direction of the longitudinal axis of the molecule, or the biomacromolecule is a bow-like (banana-shaped) molecule with its feature direction in the direction of the longitudinal axis of the molecule, or the biomacromolecule is a disk-like shaped molecule with a feature direction perpendicular to the disk, the biomacromolecule can also be but is not limited to the form of slice, needle or wire, other suitable non-spherical rigid nanoparticles can also be used.

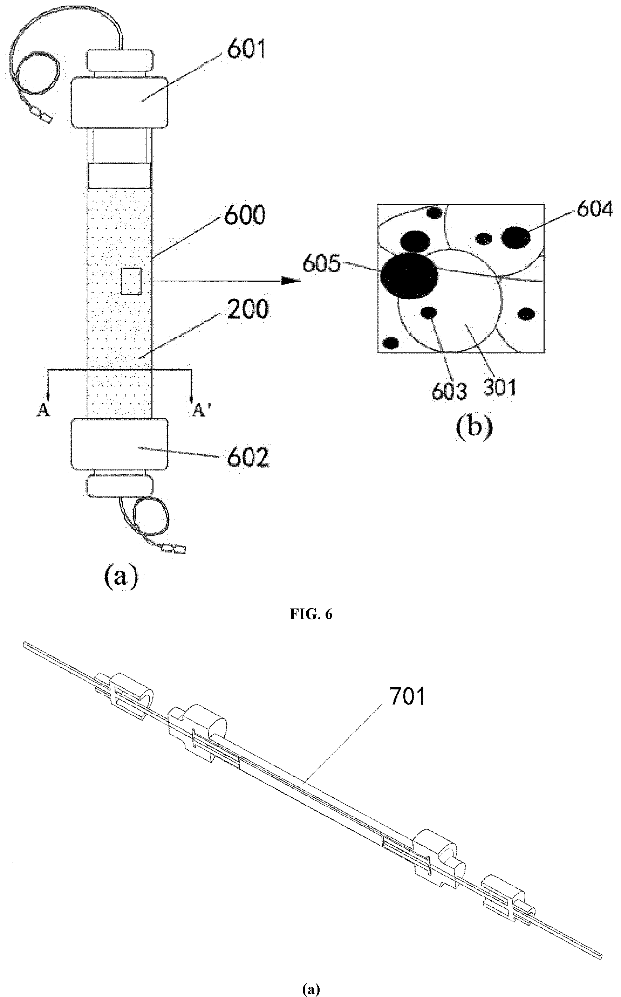

Rigid nanoparticles with or without spherical shapes are selected from at least one of a polypeptide (e.g., insulin, growth hormone), a protein (e.g., chloroplastin, collagen, etc.), a nucleic acid (e.g., DNA), a polysaccharide (e.g., cellulose, chitosan), and a lipid (e.g., monoglyceride, phospholipid, glycolipid, steroid, etc.). These biomacromolecules are commonly found in organisms and are mostly in a rod shape or a flat shape in the solution. In a preferred embodiment, as shown in FIG. 6, the biomacromolecules may or may not be chiral. Further, the biomacromolecules with chiral characteristics include left- and right-handed biomacromolecules, and the formed liquid crystal phases may form a cholesteric helical structure. As illustrated in the corresponding part of the SEM photographs with an arrow in Fig.4, the broken parts of the polymer microparticles exhibit a helical ribbon-like internal structure. One specific embodiment of the present application is a biomacromolecule cellulose nanocrystal (CNC), and the structural formula is shown below.

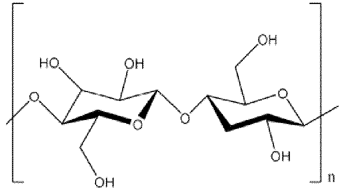

The rod-shaped biomacromolecules have a larger aspect ratio and are easier to form a liquid crystal state. As a further preferred embodiment, the cellulose nanocrystal has a length of 20-1000 nm, a width of 2-100 nm, and an aspect ratio of 1:5-1: 200.

As shown in FIG. 3 (b), the polymer microparticles may further include a polysaccharide compound 102 having a non-spherical shape, and these polysaccharide compounds and the biomacromolecules are copolymerized to form the polymer microparticles. These polysaccharide compounds are selected from group consisting of agar, agarose, glucan, starch, chitosan and trehalose. In detailed embodiments of the present application, the polysaccharide compound is agarose with the following structural formula:

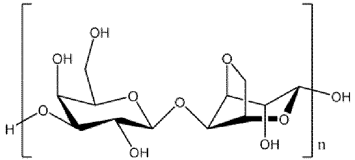

The polysaccharide compound is a gel-like dispersion that can flow before emulsification. After the dispersion, it is emulsified into emulsion droplets, as shown in FIG. 3 (b), a double helix of the polysaccharide compound 102 was formed by its single chain through the processes of cooling, curing, ageing, and the like, and therefore forms a bundled molecular structure that ultimately forms soft but stable solid porous particles. Although these polysaccharide compounds are not self-orderly arranged in the solution, they will arrange along with the biomacromolecules because of a variety of interactions between these polysaccharide compounds and the biomacromolecules, including hydrogen bonds, and eventually form an ordered structure. At the same time, in some cases, the biomacromolecules are partially ordered to form a liquid crystal state at a specific concentration, and the polysaccharide compounds will be arranged according to the arrangement of biomacromolecules as a template. These polysaccharide compounds and biomacromolecules are further copolymerized under the assistance of a cross-linking agent to form a stable particle structure but not to destroy the ordered structure of the polymer microparticles, thereby further improving the pressure resistance of the formed polymer microparticles. Meanwhile, in the preparation process of the polymer microparticles, the polysaccharide compound (such as agarose) can solidify the emulsified emulsion by cooling to provide structural support for the subsequent cross-linking polymerization, thereby simplifying the preparation process.

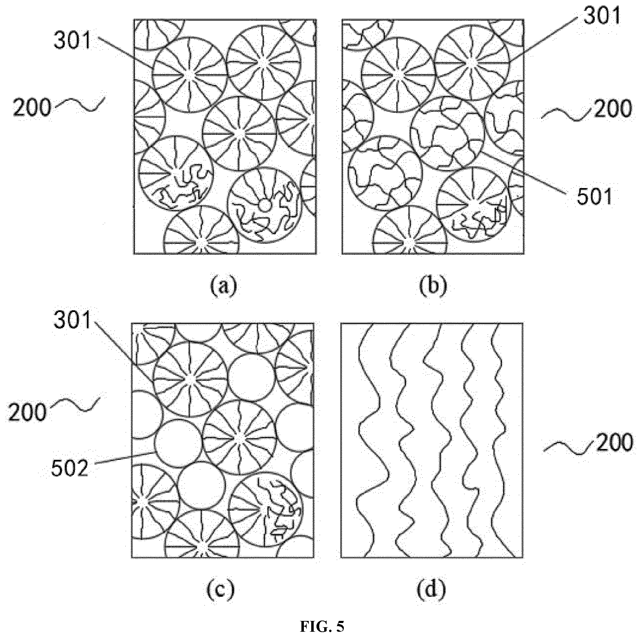

In accordance with the spirit of this application, as shown in FIG. 5(a), a preferred method of obtaining the chromatography medium 200 with an at least partially ordered pore structure is via entirely stacking the polymer microparticles 301 containing non-spherical rigid nanoparticles, and at least partially forming a substantially ordered structure. In accordance with the spirit of this application, as shown in FIG. 5(b), the chromatography medium 200 with an at least partially ordered pore structure can also be formed by stacking polymer microparticles 301 with ordered pore structures and microparticles 501 with disordered pores. As shown in FIG. 5(c), the chromatography medium 200 can also be formed by stacking polymer microparticles 301 with ordered pore structures and non-porous microparticles 502. Common microspheres with disordered pores include polysaccharide microspheres, such as agarose microspheres, while the common non-porous microspheres include inorganic silica microspheres and hydroxyapatite, among others.

In accordance with the spirit of this application, the preparation method for the chromatography medium containing the polymer microparticles consists of dispersing the rigid nanoparticles alone or with an appropriate amount of amorphous monomer or oligomer to form a lyotropic liquid crystal solution, then forming the emulsion droplets by an emulsification method. Then, it undergoes multiple steps, such as curing and crosslinking, to form a porous polymer microsphere. The rigid nanoparticles may be physically wrapped in the polymer microspheres by surrounding polymers in the polymer microparticles or directly participate in the crosslinking reaction and become part of the polymer by chemical bonding.

The chromatography medium is formed by integrally crosslinking at least partially cross-linkable oligomer materials, including rigid nanoparticles, wherein at least one of the rigid nanoparticles has a non-spherical shape in a solution, and the rigid nanoparticles at least partially form a substantially ordered structure, such as orientational order in the chromatography medium.

Specifically, as shown in FIG. 5(d), the chromatography medium which is internally at least locally ordered, is formed by the integral structure where, at least partially, sections of the entire polymer form a substantially ordered structure; however, this disclosure is not limited thereto, and other types of chromatography medium can also be included.

In accordance with the spirit of this application, the preparation method for the chromatography medium, which has an integral structure crosslinked by the rigid nanoparticles, is thus clearly distinguished from preparation processes for porous polymer microsphere by adding a crosslinking agent directly in lyotropic liquid crystal solution which is partially or integrally ordered, then to perform an in-situ polymerization. The specific operation involves adding the dispersion containing the rigid nanoparticles into the stainless steel pre-packed columns; the crosslinking agent is added dropwise while the temperature is controlled. After the pH is adjusted and the reaction is completed, the chromatography medium that includes at least partially rigid nanoparticles and the rigid nanoparticles at least partially form a substantially ordered structure in the overall structure can be obtained.

The packing method of the chromatography medium generally includes high-pressure homogenization, wet, dry, and high-density, high-viscosity packing. The high-pressure homogenization packing method is to suspend the filler in a homogeneous slurry to prepare a homogenate, and the filler is quickly pressed into the column at high flow velocity by using a high-pressure pump before the homogenate settles. In this way, a uniform column can be prepared. This is the common packing method for the analysis and preparation of chromatography columns and is also the packing method used in this application. The wet packing method is for the high-efficiency analytical columns filled with small-particle-size fillers of 3-10 µm. In order to obtain a uniform and close packed column bed, a wet packing method is usually used. The dry packing method is for columns filled with powder-shaped fillers with a relatively large grain size, and it may generally be used for filling of fillers having particle sizes of more than 50 µm. The application environment of the high-density and high-viscosity packing method is when the density of the chromatography filler is excessive, and the requirements for homogeneity of the column bed are high. The method generally uses a homogeneous slurry configured with a higher density or viscosity such that the fillers are suspended in the homogeneous slurry, and the fillers are sedimented and deposited layer by layer as the externally applied pressure is increased.

The present application also discloses a chromatography apparatus. FIG. 6 is a schematic view of a column-like chromatographic apparatus disclosed according to the present application. As shown in FIG. 6(a), said chromatography apparatus comprises carrier body 600 and a chromatography medium 200 having at least partial orderd arrangement filled inside or coated on the surface of the carrier body. The chromatography apparatus further comprises an inlet for a sample to be filtered 601 and an outlet for a sample to be filtered 602 located at two opposite end portions of the carrier body.

The principles of separation of the chromatography apparatus are shown in FIGS. 6(b). When using the porous polymer microparticle for separating molecules of different size, small protein 603 can enter the interior of the stationary phase through its smaller or larger pores, macromolecular protein 604 can only enter the interior of the stationary phase through its larger pores. In contrast, oversized protein molecules 605 have no access to the stationary phase and instead, stays in the particle gaps of the stationary phase particulates and then co-elutes with the mobile phase. In principle, oversized protein molecules are eluted first, macromolecular proteins are subsequently eluted, and small proteins are eluted last so as to achieve the purpose of effective separation.

In addition, since the polymer microparticles in the present application include at least partially ordered structure, including feature direction orientation and pore structure ordering, and the paths of molecules of identical size diffusing into and out of the polymer microparticles are regular, the peak time of the sample molecules to be separated in the chromatography apparatus of this application is shorter, i.e., the retention time can be further shortened.

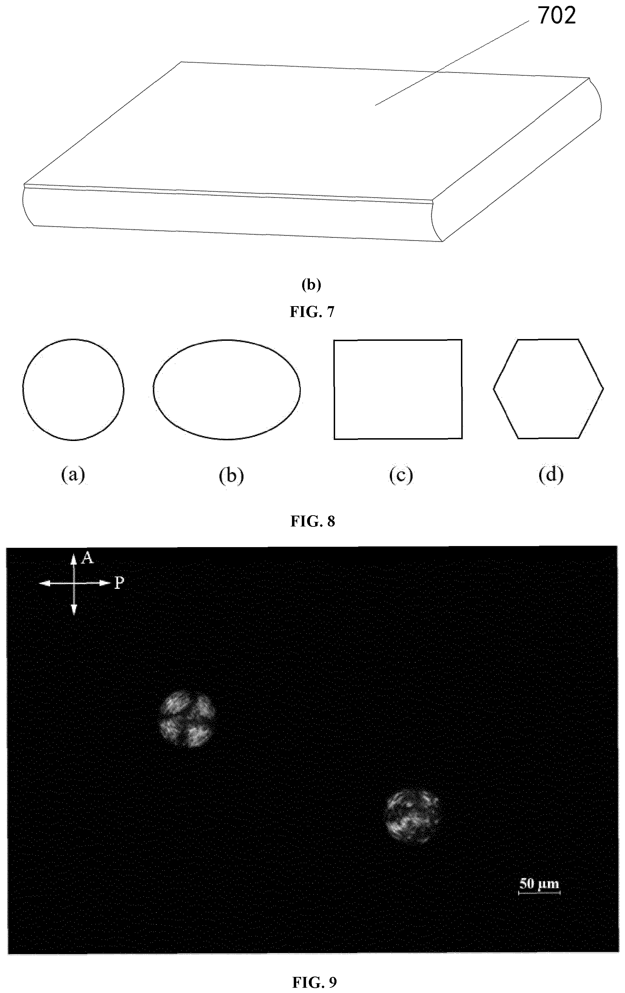

As shown in FIG.7, in a preferred technical solution, the carrier body is any one selected from cylindrical container 701 (as shown in FIG.7(a)),rectangular container 702 (as shown in FIG.7(b)), or curved hollow duct (as shown in FIG.7(c)). In particular, as shown in FIG. 6, the cross-sectional shape along A-A' of the carrier body 600 may be any one of polygons such as circle (as shown in FIG.8(a)), oval (as shown in FIG.8(b)), rectangle (as shown in FIG.8(c)) or polygon (as shown in FIG.8(d)). When the carrier body is a flat sheet substrate, the chromatography medium is coated on the surface of the flat sheet substrate in a thickness, and when the carrier is a cylindrical wall substrate or a curved hollow duct, the chromatography medium is filled in the interior of the carrier body. As a preferred technical solution, the carrier body is made of material selected from any one or more of plastic, glass, ceramic or metal.

In accordance with the spirit of this application, the present application further provides a method for preparing the chromatography medium. When at least partially chromatography medium is formed by accumulating the polymer microparticles, the specific process is described as follows:
The first step is to prepare the polymer microparticles. Embodiments of the application can include a method of making a polymer microparticle with the descriptions first, the method may include dispersing a biomacromolecule and a polysaccharide compound to form a dispersion, specifically, dispersing the biomacromolecule and the polysaccharide compound in water to form a dispersed phase solution. Second, the method further comprises the step of emulsifying the dispersion to form the emulsion droplets. Various methods for emulsification exist, including membrane emulsification. The membrane emulsification method refers to a method of forcing a dispersion phase into a continuous phase directly through the pores of a microporous membrane, and then the emulsion droplets are formed and extruded at the end of the pores in a process of emulsification. Finally, the method comprises the step of crosslinking the above emulsion droplets. The specific process is to add a cross-linking agent to the emulsion droplets formed to crosslink biomacromolecules in the emulsion, finally forms the polymer microparticles.

The second step is to weigh a certain amount of polymer microparticles; preferably, the polymer microparticles are optionally washed by suction filtration 2-3 times; the washed polymer microparticles were then swelled well in a homogeneous slurry to prepare a suspension. The homogeneous slurry is ultrapure water or phosphate buffer of different concentrations. The present application is not particularly limited herein, and the homogeneous slurries adopted are all ultrapure water in the following embodiments.

The third step is to fill the column with the suspension prepared from the second step; the suspension is packed into a column using the homogenization method with a mobile phase of ultrapure water. Specifically, the method includes pouring the suspension into a homogenate tank and waiting for the stationary phase to settle freely. After the column is filled completely, the flow velocity of the mobile phase is increased by 0.5 mL/minute every 10 minutes, and the corresponding relationship between flow velocity and pressure can be observed in real-time. When the pressure reaches about 0.2-0.25 MPa, stop increasing the flow velocity and observe whether the pressure changes. If no appreciable increase in pressure is observed, the column can be considered closely packed and the filler is not damaged, eventually forming an chromatography apparatus comprising the polymer microparticles.

When the chromatography medium is formed by integrally crosslinking at least partially cross-linkable oligomer materials, including rigid nanoparticles, the preparation method is by adding a crosslinking agent directly in dispersion of a biomacromolecule and a polysaccharide compound to perform an in-situ polymerization, which is differentiated from the preparation processes for polymer microparticles. The specific operation is adding the dispersion containing the cellulose nanocrystals and the agarose into the stainless steel pre-packed columns, and the temperature is controlled to 80°C by a heating mantle to prevent condensation of the dispersion; the crosslinking agent (1,4-butanediol diglycidyl ether) is dropwise added and followed by addition of 0.5 M sodium hydroxide, and then the mixture is placed at 38°C for reaction for 12 hours after dropping; This monolithic column is finally subjected to lyophilization or critical point drying after which a porous monolithic column bed is obtained. Where upon a large amount of alcohol and water are added, followed by washing unreacted substances, and the column is again subjected to lyophilization or critical point drying, after which a porous monolithic gel chromatography apparatus is obtained.

The structure, preparation method of the chromatography medium, and preparation method, separation effect of the chromatography apparatus will be described in detail below with reference to specific embodiments. Unless otherwise specified, mass ratio between different components will be used in the exemplary embodiments described below.

### Preliminary Example 1

Polymer microparticles containing 5% cellulose nanocrystals and 1% agarose were prepared: 0.5 grams of cellulose nanocrystals and 0.1 grams of agarose were dispersed in 9.4 grams of water during the reaction, the mixture was stirred at 90°C, forming a suspension. The suspension was poured into 100 grams of liquid paraffin containing SPAN80 (10 percent by mass concentration) and was emulsified by stirring at 80°C for 2 mins, and cooled to form the dispersion containing cured emulsion droplets. The dispersion was washed to eliminate the emulsifier and liquid paraffin. The resulting gel was then weighed and poured into 10 ml of aqueous solution containing 500 microliters of the crosslinker 1,4-butanediol diglycidyl ether, and the mixture was stirred for 12 hours. The system was added with 500 microliters of aqueous solution containing 40 wt% sodium hydroxide and 5 wt% sodium borohydride, and the mixture was stirred for 8 hours. 500 microliters of epichlorohydrin and 500 microliters of aqueous solution containing 40 wt% sodium hydroxide and 5 wt% sodium borohydride were mixed and added to the reaction mixture. The mixture was stirred for 12 hours, followed by washing after completion of the reaction. As shown in FIG. 9, the polymer microparticle shows a radial optical anisotropy (Maltese Black Cross) under a polarizing microscope, demonstrating it has radial internal configuration and radial pore distribution.

### Preliminary Example 2

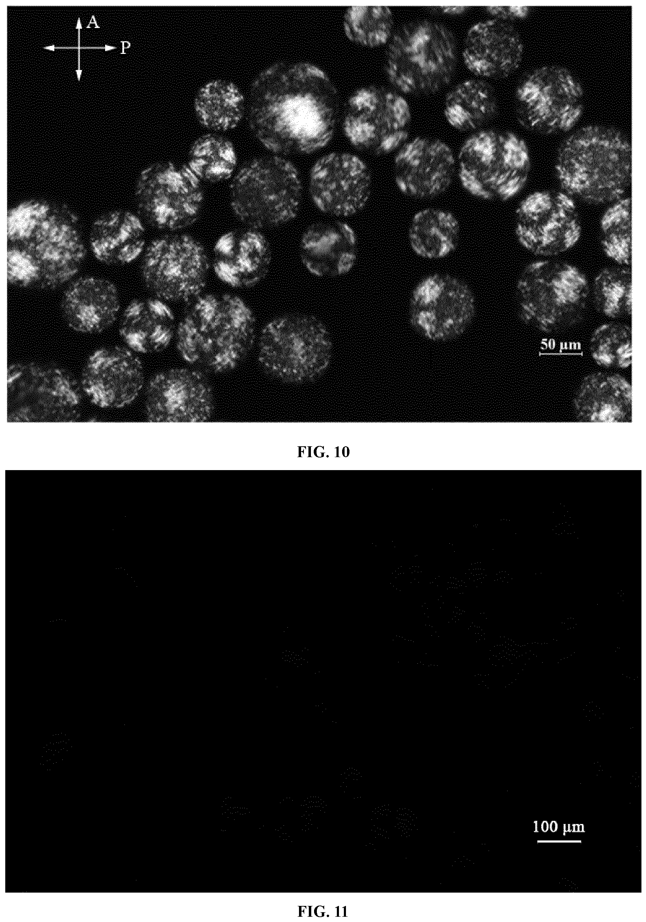

Different from the method of Preliminary Example 1, polymer microparticles containing 4% cellulose nanocrystals and 2% agarose were prepared, and the remaining steps and experimental conditions were the same as those in Preliminary Example 1. As shown in FIG. 10, the polymer microparticle shows a radial optical anisotropy (Maltese Black Cross) under a polarizing microscope, demonstrating it has radial internal configuration and radial pore distribution.

### Preliminary Example 3

Different from the method of Preliminary Example 1, polymer microparticles containing 2% cellulose nanocrystals and 4% agarose were prepared, and the remaining steps and experimental conditions were the same as those in Preliminary Example 1. As shown in FIG. 11, the polymer microparticle have no obvious radial optical anisotropy (Maltese Black Cross) under a polarizing microscope, demonstrating a declining trend to form radial internal configuration and radial pore distribution.

### Preliminary Example 4

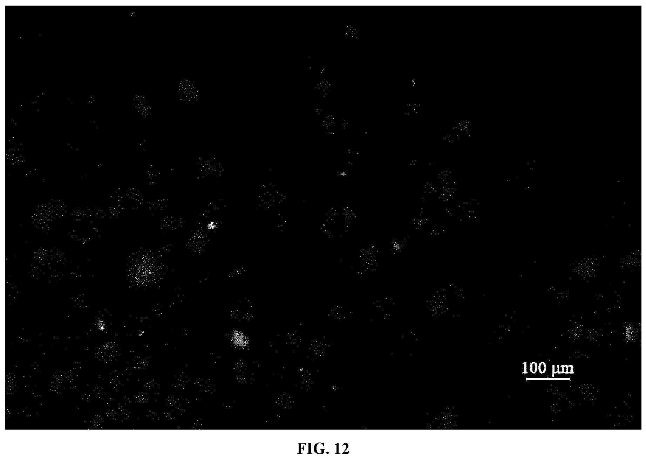

Different from the method of Preliminary Example 1, polymer microparticles containing 1% cellulose nanocrystals and 5% agarose were prepared, and the remaining steps and experimental conditions were the same as those in Preliminary Example 1. As shown in FIG. 12, the polymer microparticle have no obvious radial optical anisotropy (Maltese Black Cross) under a polarizing microscope, demonstrating a declining trend to form radial internal configuration and radial pore distribution.

### Example 1-4

After sieving, the microparticles prepared by Preliminary Example 1-4 that have the particle size between 60 µm and 90 µm are retained; the polymer microparticles are optionally washed by by suction filtration for 3 times, the washed polymer microparticles were then swelled well in ultrapure water, and then the suspension formed is injected into the hollow column with specifications for 5*100mm by the above mentioned homogenization method to form the corresponding chromatography apparatus.

### Example 5

After sieving, the microparticles prepared by Preliminary Example 2 that have the particle size between 60 µm and 90 µm are retained; the polymer microparticles are optionally washed by by suction filtration for 3 times, the washed polymer microparticles were then swelled well in ultrapure water, and then the suspension formed is injected into the hollow column with specifications for 16*400mm by the above mentioned homogenization method to form the chromatography apparatus.

### Comparative Example 1

Different from the method of Preliminary Example 1, agarose microspheres with 6% solid content was prepared, and the remaining steps and experimental conditions were the same as those in Preliminary Example 1.

The agarose spheres with solid content of 6% were sieved and the portion with particle size of 60-90 µm were retained as the stationary phase, and the remaining steps were the same as those in Example 1-4.

### Comparative Example 2

Different from the method of Preliminary Example 1, agarose microspheres with 6% solid content was prepared, and the remaining steps and experimental conditions were the same as those in Preliminary Example 1.

The agarose spheres with solid content of 6% were sieved and the portion with particle size of 60-90 µm were retained as the stationary phase, and the remaining steps were the same as those in Example 5.

To verify that the chromatography apparatus provided in the present application have better separation effect, the chromatography apparatus in each example and comparative example are subjected to sample loading and separation on a plurality of standards. In the detection of column, the protein purification instrument used is AKTA PURE; the mobile phase employed in the separation of acetone is ultrapure water, and the mobile phases employed in the separation of BSA or CytochromeC are both the cocktail buffer of PBS solution and sodium chloride solution.

### Experimental Examples

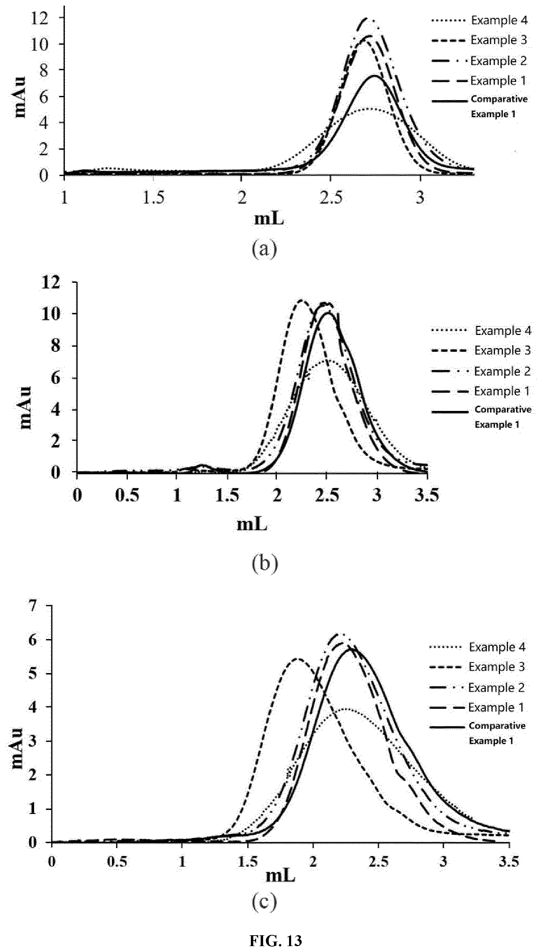

The chromatography apparatus obtained in Examples 1-4 and Comparative Examples 1 are connected respectively to the protein purification instrument, and then 25 microliters of 0.5 % acetone solution are loaded with a flow velocity of 0.1 mL/minute. The ultrapure water within the chromatography apparatus is substituted with the cocktail buffer of 0.2 mmol/L PBS solution and 0.15 mol/L sodium chloride solution, and then 25 microliters of 0.8 mg/ml BSA solution and 25 microliters of 0.5 mg/ml CytochromeC solution are respectively loaded with a flow velocity of 0.1 mL/minute. The separation effect of acid hydrolysis is then tested, and the results are shown in Table 1 and FIG. 13.

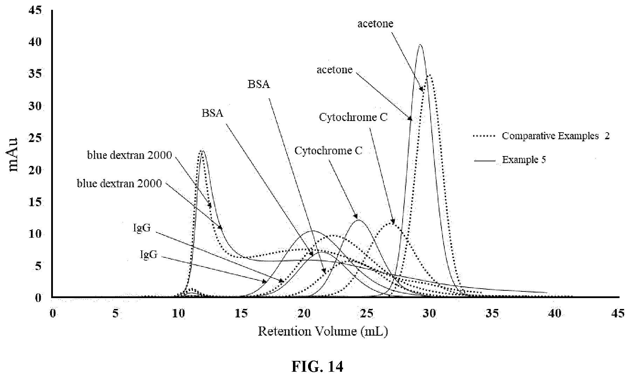

The chromatography apparatus obtained in Examples 5 and Comparative Examples 2 are connected respectively to the protein purification instrument. Then, a mixture of 300 microliters of 1 % acetone solution and 300 microliters of 1 mg/ml Blue Dextran 2000 solution are loaded with a flow velocity of 0.1 mL/minute, and the separation effect of acid hydrolysis is then tested. The ultrapure water within the chromatography apparatus is substituted with the cocktail buffer of 0.2 mmol/L PBS solution and 0.15 mol/L sodium chloride solution. Then 300 microliters of 0.8 mg/ml BSA solution, 300 microliters of 0.5 mg/ml CytochromeC solution and 300 microliters of 1 mg/ml IgG solution are respectively loaded with a flow velocity of 0.1 mL/minute. The separation effect of acid hydrolysis is then tested, and the results are shown in Table 2 and FIG. 14.

**TABLE 1**

| The data on separation by chromatography apparatus of Example 1-4 and Comparative Example 1 | | | | | | |
|---|---|---|---|---|---|---|
| Items | | Example 1 | Example 2 | Example 3 | Example 4 | Comparative Example 1 |
| retention volume (mL) | acetone | 2.72 | 2.703 | 2.68 | 2.71 | 2.74 |
| | cytochrome C | 2.473 | 2.463 | 2.237 | 2.483 | 2.515 |
| | BSA | 2.224 | 2.213 | 1.880 | 2.238 | 2.277 |
| half-width of the peak (mL) | acetone | 0.35 | 0.35 | 0.31 | 0.62 | 0.36 |
| | cytochrome C | 0.55 | 0.61 | 0.55 | 0.876 | 0.62 |
| | BSA | 0.65 | 0.64 | 0.69 | 1.0 | 0.7 |
| theoretic plates | acetone | 3347.2 | 3231.2 | 4068.2 | 1055 | 3155 |
| | cytochrome C | - | - | - | - | - |
| | BSA | - | - | - | - | - |
| asymmetry | acetone | 0.89 | 1.19 | 1.02 | 0.99 | 0.87 |
| | cytochrome C | 1.24 | 1.23 | 1.46 | 1.22 | 1.27 |
| | BSA | 1.36 | 1.42 | 1.79 | - | 1.46 |

**TABLE 2**

| The data on separation by chromatography apparatus of Example 5 and Comparative Example 2 | | | |
|---|---|---|---|
| Items | | Example 5 | Comparative Example 2 |
| retention volume (mL) | blue dextran 2000 | 11.978 | 11.729 |
| | IgG | 20.686 | 22.185 |
| | BSA | 21.467 | 23.711 |
| | cytochrome C | 24.294 | 26.876 |
| | acetone | 29.279 | 29.966 |
| half-width of the peak (mL) | blue dextran 2000 | 1.68 | 1.23 |
| | IgG | 5.56 | 5.65 |
| | BSA | 4.14 | 4.53 |
| | cytochrome C | 3.57 | 4.08 |
| | acetone | 2.28 | 2.48 |
| theoretic plates | blue dextran 2000 | - | - |
| | IgG | - | - |
| | BSA | - | - |
| | cytochrome C | - | - |
| | acetone | 6069 | 5385.5 |
| asymmetry | blue dextran 2000 | 3.11 | 2.36 |
| | IgG | 1.37 | 1.42 |
| | BSA | 1.18 | 1.17 |
| | cytochrome C | 1.15 | 1.16 |
| | acetone | 1.18 | 0.97 |

Since acetone molecules can pass through all spaces (including the gaps and internal pores of the microparticles) in the chromatography medium of the chromatography apparatus, the chromatography packing material is evaluated for quality by measuring theoretical plates and asymmetry through the retention volume of the elution of acetone, to see whether or not the packing material meets the application criteria. The conventional judge criteria are the theoretical plates ≥ 3000 and the asymmetry between 0.8 and 1.8. It is thus known, according to Table 1 and FIG. 13, that the samples of the rest of the embodiments other than the datas of Example 4 are, all meet the set criteria for packing. Through the asymmetry analysis of sample peak, we can realize the asymmetry of the sample peak in Example 3 is close to or exceeds 1.5, and tailing is obvious, which proves that the size of the pores is smallest and is not appropriate for the separation of larger molecular weight samples. By comprehensive comparison, the polymer microparticles obtained in Preliminary Example 1-2 can be replaced with conventional chromatography fillers with the same solid content.

We use the method of installing a high-capacity chromatography column to measure the pore volume, wherein Blue Dextran 2000 (2000 kDa) is the maximum molecular weight standard, and it does not enter the pores of the polymer microparticle when passing through the column; only pass through the particle gaps between microparticles, then the retention volume of the elution of the standard is the volume of particulate gaps; Acetone (58 kDa) is the minimum molecular weight standard and it can enter all of the spaces between the stationary phase of the chromatography apparatus. All of the spaces referred to here comprise the gaps between microparticles and internal pores of the microparticles, and the retention volume of the acetone is the sum of the volume of particulate gaps and particulate pores. Therefore, the internal pore volume of the microparticles is the difference between the retention volume of the acetone and the blue glucan 2000.

The pore volume of the polymer microparticles of Examples 5 is calculated from the data in Table 2 to be 17.301 mL, and the pore volume of the agarose microspheres of Examples 5 having disordered pores is also calculated to be 18.237mL. Therefore, the disordered pores volume of the agarose microspheres is 0.936 mL greater than the ordered pores volume of the polymer microparticles.

Further, according to the data in Table 2, the retention volume of the protein IgG in the stationary phase with an ordered pore in Example 5 is 1.5 mL faster than in the agarose sphere with a disordered pore in Comparative Examples 2. Accordingly, the BSA and Cytochrome C retention volumes in Example 5 are 2.24 mL and 2.58 mL faster, respectively, than in Comparative Example 2. In combination with FIG. 14, the outflow velocity of the sample with the ordered pore is faster, and the peak width at half the height of the protein standard is smaller, which can demonstrate a sharper peak shape and higher column efficiency.

It should be understood that although the examples described above provided certain specific embodiments in accordance with the present invention, those embodiments are exemplary, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention and are not intended to limit the scope of protection of the present invention. All equivalent embodiments or modifications that do not depart from the art spirit of the present invention should fall within the scope of protection of the present invention.

## Claims

1. Chromatography medium, wherein the chromatography medium is at least partially composed of polymer materials formed by crosslinking at least partially cross-linkable oligomer materials, including rigid nanoparticles, wherein at least one of the rigid nanoparticles has a non-spherical shape in a solution, the rigid nanoparticles at least partially form a substantially ordered structure, such as orientational order in the chromatography medium.

2. The chromatography medium according to claim 1, wherein the chromatography medium is formed by accumulating the polymer materials which is at least partially polymer microparticles; the polymer microparticles are formed by crosslinking at least partially cross-linkable oligomer materials, including rigid nanoparticles, wherein at least one of the rigid nanoparticles has a non-spherical shape in a solution; the rigid nanoparticles at least partially form a substantially ordered structure, such as orientational order in the polymer microparticle.

3. The chromatography medium according to claim 2, wherein the polymer microparticles have one or more regions in which rigid nanoparticles are arranged substantially in order, and the molecular arrangement between the plurality of regions may not be correlated, correlated, or partially correlated.

4. The chromatography medium according to claim 1, wherein the chromatography medium is formed by integrally crosslinking at least partially cross-linkable oligomer materials, including rigid nanoparticles, wherein at least one of the rigid nanoparticles has a non-spherical shape in a solution, and the rigid nanoparticles at least partially form a substantially ordered structure, such as orientational order in the chromatography medium.

5. The chromatography medium according to claim 1, wherein the shape of the non-spherical rigid nanoparticles are rod-shaped, strip-shaped, sheet-shaped, needle-shaped, or linear with its feature direction along the direction of the longitudinal axis of the molecule.

6. The chromatography medium according to claim 1, wherein the shape of the non-spherical rigid nanoparticles is disk-shaped with its feature direction perpendicular to the disk.

7. The chromatography medium according to claim 5 or 6, wherein there is internal structural ordering over the whole chromatography medium, the distribution of the feature direction is any one of substantially along the particle radius direction, along the particle bipolar axis direction, or on a plurality of concentric circles inside the microparticles.

8. The chromatography medium according to claim 5 or 6, wherein the feature direction is substantially parallel, fan-shaped, or spirally arranged in an ordered local region.

9. The chromatography medium according to any one of claims 1-4, wherein at least one member of the rigid nanoparticles is selected from the polypeptide, protein, nucleic acid, polysaccharide, and lipid.

10. The chromatography medium according to claim 9, wherein rigid nanoparticles having a non-spherical shape are cellulose nanocrystals or cellulose nanofibers.

11. The chromatography medium according to claim 1, wherein the chromatography medium further comprises a polysaccharide compound having no obvious non-spherical shape in a solution, and the polysaccharide compound and the rigid nanoparticles are copolymerized to form the polymer microparticles.

12. The chromatography medium according to claim 11, wherein the mass ratio of the rigid nanoparticles to the polysaccharide compound is 1:10 -50:1.

13. The chromatography medium according to claim 11, wherein at least one member of the polysaccharide compound is selected from the group consisting of agar, agarose, dextran, starch, chitosan, and trehalose.

14. The chromatography medium according to claim 1, wherein the chromatography medium has a range of separation of 50-300000 kDa.

15. A chromatography apparatus comprising,
carrier body;
a chromatography medium filled inside or coated on the surface of the carrier body;
the chromatography medium includes a chromatography medium as described in any of claims 1-14.

16. The chromatography apparatus according to claim 15, wherein the wall of the carrier body is of the shape of cylinder, rectangle or curved hollow duct.

17. The chromatography apparatus according to claim 16, wherein the axial cross-section of the cylindrical wall substrate is any one selected from circle, oval or polygon.

18. The chromatography apparatus according to any one of claims 16-17, wherein the carrier body is made of material selected from any one or more of plastic, glass, ceramic or metal.
